# EUROPÄISCHE PATENTSCHRIFT

(11) **EP 3 790 180 B1**
(45) Veröffentlichungstag und Bekanntmachung des Hinweises auf die Patenterteilung: **10.08.2022**
(21) Anmeldenummer: 19195424.7
(22) Anmeldetag: 04.09.2019
(51) Int. Cl.: H02M 5/458, F27D 11/06, F27D 19/00, H05B 6/10, F27B 3/08, H02J 50/10, H05B 6/06, H02M 5/451, H02M 1/00, H02M 7/48

(54) **VORRICHTUNG UND VERFAHREN ZUR INDUKTIVEN ERWÄRMUNG VON METALLGUT**
DEVICE AND METHOD FOR INDUCTIVE HEATING OF METAL MATERIAL
DISPOSITIF ET PROCÉDÉ DE CHAUFFAGE INDUCTIF DE L'ARTICLE MÉTALLIQUE

(43) Veröffentlichungstag der Anmeldung: 10.03.2021
(73) Patentinhaber: IAS GmbH, 58640 Iserlohn (DE)
(72) Erfinder: Passoni, Marco, 27010 Copiano PV (IT); Lüke, Andreas, 59494 Soest (DE)
(74) Vertreter: Patentanwälte Dörner & Kötter PartG mbB

(56) Entgegenhaltungen:
- EP-A1- 2 890 217
- EP-A2- 1 280 381
- JP-A- 2001 035 645
- US-A1- 2009 114 640

## Beschreibung

Die Erfindung betrifft eine Vorrichtung zur induktiven Erwärmung von Metallgut, insbesondere von Metallblöcken nach dem Oberbegriff des Patentanspruchs 1. Die Erfindung betrifft weiterhin ein Verfahren zur gleichmäßigen Erwärmung von Metallgut nach dem Patentanspruch 4.

Vorrichtungen zur induktiven Erwärmung von Metallgut, sogenannte Induktionsöfen, sind seit Jahrzehnten bekannt. Sie werden eingesetzt, um Metalle auf effiziente Art und Weise zu erwärmen oder zu schmelzen.

Die prozesstechnischen Anforderungen der Temperaturführung bei der Erwärmung von Metallblöcken bzw.-bolzen zur Umformung sind in den letzten Jahren stetig gestiegen. Die richtige Blocktemperatur ist von zentraler Bedeutung für einen wirtschaftlichen und qualitätsgerechten Strangpressbetrieb. Die Problematik des Anwärmprozesses unterscheidet heute in der Regel zwei Teilaufgaben: Die Erwärmung des Bolzens auf Prozesstemperatur und die Erzeugung eines axialen Blocktemperaturprofils (Taper), welches die Erwärmung während des Umformprozesses derart kompensiert, dass ein isothermer Pressprozess erreicht wird. Zur Erwärmung der Metallblöcke werden unter anderem Induktionsanlagen eingesetzt, bei denen die für die Erwärmung erforderliche Energie direkt in den zu erwärmenden Metallblock induziert wird, so dass das gewünschte Wärmeprofil unmittelbar in dem Metallblock entsteht, wodurch eine besonders effiziente Weise der Erwärmung bewirkt ist. Hierzu sind mehrere Induktionsspulen angeordnet, die jeweils über eine zugeordnete Wechselstromversorgung verfügen. Jeder Stromversorgungskreislauf besteht aus einem Wechselrichter zur Bereitstellung der Wirkleistung sowie einem Kompensationskondensator zur Bereitstellung der Blindleistung. Jeder Wechselrichter wird über einen Gleichrichter versorgt, der die elektrische Leistung vom Dreiphasenwechselstrom in Gleichstrom wandelt. Dabei kann jedem Wechselrichter ein Gleichrichter zugeordnet sein. Alternativ kann auch allen Wechselrichtern ein Gleichrichter zugeordnet sein. Alternativ kann auch allen Wechselrichtern ein Gleichrichter zugeordnet sein. Entsprechende Anordnungen werden auch in modernen Induktionstiegelöfen eingesetzt, um zu schmelzendes Metallgut mit möglichst großer Leistung in kurzer Zeit aufzuschmelzen.

Problematisch bei solchen Mehrspulensystemen ist, dass die einzelnen Induktionsspulen sich gegenseitig beeinflussen, insbesondere dann, wenn Eisenblöcke erwärmt werden, wodurch in dem Eisenmaterial hohe Ströme induziert werden. Um diesem Effekt entgegenzuwirken, ist es bekannt, die Induktionsspulen jeweils durch wenigstens einen Wechselrichter mit einstellbarer Frequenz zu speisen. Über die Wechselrichter werden die einzelnen Spannungen derart geregelt, dass die Spannungen der Induktionsspulen gleichphasig sind. Derartige Stromversorgungseinrichtungen für Induktionsöfen sind beispielsweise in der DE 10 2007 051 666 A1 sowie der EP 2 276 323 A1, als auch in der EP 1 280 381 A2, der JP 2001 035645 A, der US 2009/114640 A1 und der EP 2 890 217 A1 beschrieben.

Bei den vorbekannten Vorrichtungen hat sich jedoch gezeigt, dass auch bei phasengleicher Einregelung der Spannungen der einzelnen Induktionsspulen sich über die Spulenbereiche unterschiedliche Temperaturen des zu erhitzenden Materials ergeben.

Hier will die Erfindung Abhilfe schaffen. Der Erfindung liegt die Aufgabe zugrunde, eine Vorrichtung zur induktiven Erwärmung von Metallgut, insbesondere von Metallblöcken zu schaffen, die eine gleichmäßige Temperaturverteilung in einem zu erwärmenden Metallblock ermöglicht. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur induktiven Erwärmung von Metallgut, insbesondere von Metallblöcken bereitgestellt, die eine gleichmäßige Temperaturverteilung in dem zu erwärmenden Metallgut ermöglicht. Dadurch, dass wenigstens eine Induktionsspule mit einer Strommesseinrichtung verbunden ist, die zur kontinuierlichen Bereitstellung des Spulenstroms als Regelgröße mit einem Eingang einer Steuer- und Regeleinrichtung verbunden ist, über welche die Frequenz der Ausgangsspannung des die Induktionsspule speisenden wenigstens einen Wechselrichters als Stellgröße veränderbar ist, wobei die jeweils einer Induktionsspule zugeordneten Steuer- und Regeleinrichtungen über einen Feldbus miteinander verbunden sind, über den ein Sollwert als Führungsgröße vorgebbar ist, ist ein geschlossener Regelkreis erzielt, mit dem ein gleichphasiger Stromfluss in den wenigstens zwei Induktionsspulen bewirkt ist, wodurch eine gleichmäßige Temperaturverteilung ermöglicht ist. Kerngedanke der vorliegenden Erfindung ist dabei, dass unterschiedliche Ströme innerhalb der zu erwärmenden Metallblöcke zu unterschiedlichen Erwärmungen führen. Die im Stand der Technik bekannte phasengleiche Einregelung der Spannungen bewirkt jedoch nicht, dass die in den Induktionsspulen fließenden Ströme phasengleich sind, da diese durch in den Metallblöcken induzierten Ströme beeinflusst sind. Der Leistungsfluss zwischen zwei magnetisch gekoppelten Zonen wird durch die Phasenverschiebung zwischen den Spulenströmen erzeugt. Die Phasenverschiebung ist abhängig von der Impedanz der Induktionsspulen, der Kompensationskapazität sowie der Ausgangsinduktivität des Wechselrichters. Die Impedanz der Induktionsspule ist nicht konstant, sondern sie ist eine Funktion der Metallblocktemperatur, da die Temperatur einen Einfluss auf den Widerstand des Materials hat. Weiterhin hat die Position des Metallblocks sowie auch seine Länger einen Einfluss auf die Spulenimpedanz.

Bei der erfindungsgemäßen Vorrichtung dient daher der Strom als Regelgröße, welche über die Frequenz der Ausgangsspannungen der die Spulen speisenden Wechselrichter phasengleich einregelbar ist.

Die vorliegende Erfindung ist nicht auf den Einsatz zur Erwärmung von Metallblöcken für ein nachfolgendes Umformverfahren, insbesondere Strangpressverfahren beschränkt. Vielmehr sind die erfindungsgemäße Vorrichtung und das erfindungsgemäße Verfahren auch zur Erwärmung von Metallgut zum Aufschmelzen einsetzbar.

In Weiterbildung der Erfindung ist eine als Masterspule fungierende Induktionsspule angeordnet, die mit einer Strommesseinrichtung verbunden ist, die zur Synchronisation des Spulenstroms der übrigen Induktionsspulen zur kontinuierlichen Bereitstellung der Spulenstroms als Führungsgröße mit dem Feldbus verbunden ist. Hierdurch ist eine Einstellung des Spulenstroms der Induktionsspulen über die Einstellung der Masterspule ermöglicht. Bevorzugt ist wenigstens ein Gleichrichter zur Transformation einer Dreiphasen-Wechselspannung in eine Einphasen-Gleichspannung zur Spannungsversorgung der Wechselrichter angeordnet.

Der Erfindung liegt weiterhin die Aufgabe zu Grunde, ein Verfahren zur gleichmäßigen Erwärmung von Metallgut bereitzustellen. Gemäß der Erfindung wird diese Aufgabe durch ein Verfahren mit den Merkmalen des Patentanspruchs 4 gelöst. Dadurch, dass an wenigstens zwei versetzt zueinander angeordneten Induktionsspulen jeweils über wenigstens einen Wechselrichter eine Wechselspannung angelegt wird, der Spulenstrom jeder Induktionsspule kontinuierlich gemessen wird und in Abhängigkeit von einem vorgegebenen Sollwert innerhalb eines geschlossenen Regelkreises die Frequenz der Wechselrichter derart geändert wird, dass der gemessene Spulenstrom der Induktionsspulen auf den Sollwert eingeregelt wird, ist eine Synchronisation des Stromflusses in allen Induktionsspulen erzielt, wodurch eine gleichmäßige Erwärmung des zu erwärmenden Metallguts ermöglicht ist. Vorteilhaft wird eine Masterspule eingesetzt, deren Spulenstrom durch eine Strommessvorrichtung kontinuierlich erfasst und den Regelkreisen der weiteren Induktionsspulen als Führungsgröße vorgegeben wird.

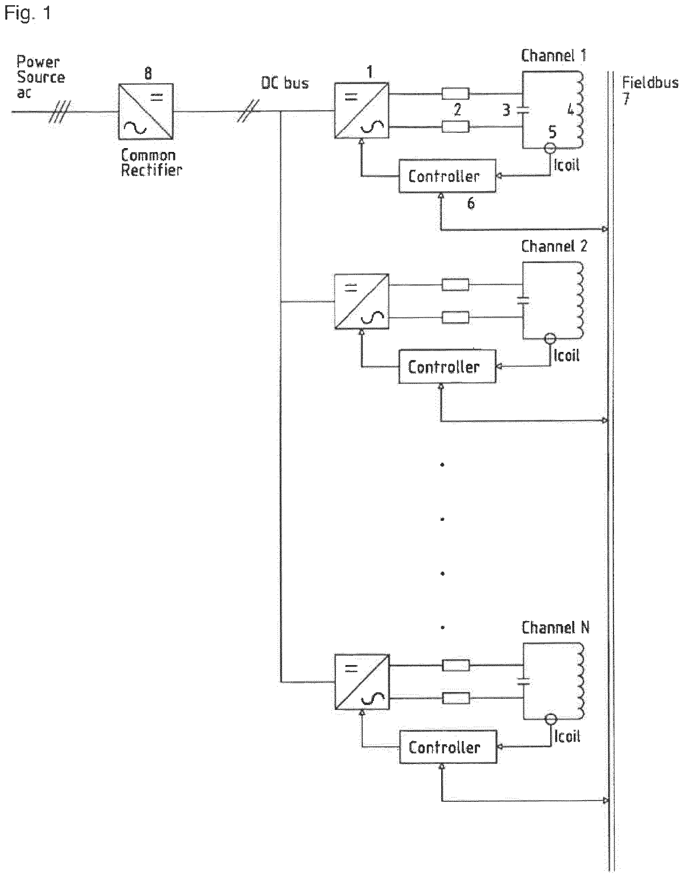

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt die schematische Darstellung der Spannungsversorgung der Induktionsspulen einer erfindungsgemäßen Vorrichtung zur induktiven Erwärmung von Metallgut.

Die als Ausführungsbeispiel gewählte Vorrichtung zur induktiven Erwärmung von Metallgut ist als Mehrkanalbolzeninduktionsofen mit mehreren Induktionsspulen ausgeführt. Alternativ kann die Vorrichtung zur induktiven Erwärmung von Metallgut auch als Induktionstiegelofen ausgeführt sein. Der generelle Aufbau solcher Induktionsöfen oder Induktionstiegelöfen ist dem Fachmann bekannt. Daher wird nachfolgend die Anordnung der Induktionsspulen sowie deren Spannungsversorgung thematisiert:
Die Spannungsversorgung der erfindungsgemäßen Vorrichtung ist in Figur 1 dargestellt. Jeder Kanal umfasst eine Induktionsspule 4, die über einen zugeordneten Wechselrichter 1 mit Spannung versorgt wird. Die Wechselrichter 1 sind über einen gemeinsamen Gleichrichter 7 gespeist. Die Last ist an den Wechselrichtern 1 über Spulen 2 angeschlossen, um die rechteckförmige Ausgangsspannung des Wechselrichters 1 in einer sinusförmige Spulenspannung zu überführen. Die Last des Wechselrichters 1 ist durch die Induktionsspule 4 mit ihrem Kompensations-Kondensator 3 gebildet.

Jeder Wechselrichter 1 ist mit einer Steuer- und Regeleinrichtung 6 verbunden, über den die Ausgangsspannung des Wechselrichters 1 als Stellgröße in Abhängigkeit der Differenz eines vorgegebenen Soll-Stroms zu dem aktuellen Ist-Strom der zugeordneten Induktionsspule 4 veränderbar ist. Zur kontinuierlichen Erfassung des Ist-Stroms der Induktionsspule 4 als Regelgröße ist ein Spulenstrom-Messwertgeber 5 angeordnet, der mit der Steuer- und Regeleinrichtung 6 verbunden ist. Zur Vorgabe des Sollstroms als Führungsgröße sind die Steuerund Regeleinrichtungen 6 der Wechselrichter 1 mit einem Feldbus 7 verbunden. Der Feldbus 7 dient der Synchronisation der Wechselrichter 1 und dem Austausch der Prozesswerte zwischen den Steuer- und Regeleinrichtungen 6. Der Sollstrom als Führungsgröße kann entweder als Vorgabe in den Feldbus 7 eingespeist werden, oder eine Induktionsspule wird als Masterspule eingesetzt, wobei deren Strom als Führungsgröße über einen Spulenstrom-Messwertgeber 5 in den Feldbus 7 eingespeist wird. Basierend auf dem Vergleich des über den Feldbus 7 als Führungsgröße vorgegebenen Soll-Stroms und des über den jeweiligen Spulenstrom-Messwertgeber 5 ermittelten Ist-Stroms wird die Ausgangsspannung des jeweiligen Wechselrichters 1 geändert, um die von der Masterspule vorgegebene Stromphase bei allen Induktionsspulen 4 einzustellen, wodurch ein phasengleicher Stromverlauf aller Induktionsspulen 4 erzielt wird. Hierdurch ist die Temperaturverteilung in dem zu erwärmenden Metallgut optimiert.

## Patentansprüche

1. Vorrichtung zur induktiven Erwärmung von Metallgut, insbesondere von Metallblöcken, umfassend wenigstens zwei zueinander versetzt angeordnete Induktionsspulen (4), die jeweils parallel mit einem Kompensations-Kondensator (3) verbunden sind und wenigstens zwei Wechselrichter (1) mit einstellbarer Frequenz der Ausgangsspannung, die angeordnet sind, die Induktionsspulen mit Strom zu speisen, **dadurch gekennzeichnet, dass** die Wechselrichter (1) jeweils eine Steuer- und Regeleinrichtung (6) aufweisen, wobei wenigstens eine Induktionsspule (4) mit einer Strommesseinrichtung (5) verbunden ist, die zur kontinuierlichen Bereitstellung des Spulenstroms als Regelgröße mit einem Eingang der angeordneten Steuer- und Regeleinrichtung (6) verbunden ist, die eingerichtet ist, die Frequenz der Ausgangsspannung des die Induktionsspule (4) speisenden wenigstens einen Wechselrichters (1) als Stellgröße zu verändern, wobei die jeweils einer Induktionsspule (4) zugeordneten Steuer- und Regeleinrichtungen (6) über einen Feldbus (7) miteinander verbunden sind, über den ein Sollstrom als Führungsgröße vorgegeben wird.

2. Vorrichtung nach Anspruch 1, wobei eine als Masterspule fungierende Induktionsspule (4) angeordnet ist, die mit einer Strommesseinrichtung (5) verbunden ist, die zur Synchronisation des Spulenstroms der übrigen Induktionsspulen (4) zur kontinuierlichen Bereitstellung des Spulenstroms als Führungsgröße mit dem Feldbus (7) verbunden ist.

3. Vorrichtung nach einem der vorgenannten Ansprüche, wobei wenigstens ein Gleichrichter (8) zur Transformation einer Dreiphasen-Wechselspannung in eine Einphasen-Gleichspannung zur Spannungsversorgung der Wechselrichter (1) angeordnet ist.

4. Verfahren zur gleichmäßigen Erwärmung von Metallgut, mit einer Vorrichtung nach einem der Ansprüche 1 bis 3, wobei an wenigstens zwei versetzt zueinander angeordnete Induktionsspulen (4), die jeweils parallel mit einem Kompensations-Kondensator (3) verbunden sind, jeweils über wenigstens einen Wechselrichter (1) eine Wechselspannung angelegt wird, der Spulenstrom jeder Induktionsspule (4) kontinuierlich gemessen wird und in Abhängigkeit von einem vorgegebenen Sollstrom innerhalb eines geschlossenen Regelkreises die Frequenz der Wechselrichter (1) derart geändert wird, dass der gemessene Spulenstrom der Induktionsspulen (4) auf den Sollstrom eingeregelt wird.

5. Verfahren nach Anspruch 4, wobei eine Induktionsspule (4) als Masterspule eingesetzt wird, deren Spulenstrom durch eine Strommessvorrichtung (5) kontinuierlich erfasst und den Regelkreisen der weiteren Induktionsspulen (4) als Führungsgröße vorgegeben wird.

## Claims

1. Device for inductive heating of metal material, in particular of metal blocks, comprising at least two induction coils (4) arranged offset from one another, which are each connected in parallel to a compensation capacitor (3) and at least two inverters (1) with adjustable frequency of the output voltage, which are arranged to feed the induction coils with current, **characterised in that** the inverters (1) each have a control and regulating device (6), wherein at least one induction coil (4) is connected to a current measuring device (5), which, for the continuous provision of the coil current as a controlled variable, is connected to an input of the arranged control and regulating device (6), which is set up to change the frequency of the output voltage of the at least one inverter (1) feeding the induction coil (4) as a manipulated variable, wherein the control and regulating devices (6) respectively assigned to an induction coil (4) are connected to one another via a fieldbus (7), via which a desired current is specified as reference variable.

2. Device according to claim 1, wherein an induction coil (4) acting as a master coil is arranged, which is connected to a current measuring device (5), which is connected to the fieldbus (7) for synchronisation of the coil current of the remaining induction coils (4) for continuous provision of the coil current as a reference variable.

3. Device according to one of the previous claims, wherein at least one rectifier (8) is arranged for transforming a three-phase alternating voltage into a singlephase direct voltage for supplying voltage to the inverters (1).

4. Method for uniform heating of metal material with a device according to one of claims 1 to 3, wherein an alternating voltage is applied to at least two induction coils (4), which are arranged offset relative to one another and are each connected in parallel to a compensation capacitor (3), in each case via at least one inverter (1), the coil current of each induction coil (4) is continuously measured and, as a function of a predetermined desired current, the frequency of the inverters (1) is changed within a closed control loop in such a manner that the measured coil current of the induction coils (4) is adjusted to the desired current.

5. Method according to claim 4, wherein an induction coil (4) is used as a master coil, the coil current of which is continuously detected by a current measuring device (5) and is specified to the control loops of the further induction coils (4) as a reference variable.

## Revendications

1. Dispositif pour l'échauffement par induction de produits métalliques, notamment de blocs métalliques, comprenant au moins deux bobines inductrices (4) disposées réciproquement décalées, qui sont reliées chacune en parallèle avec un condensateur de compensation (3), et au moins deux onduleurs (1) à fréquence réglable de la tension de sortie, disposés de sorte à alimenter les bobines inductrices en courant, **caractérisé en ce que** les onduleurs (1) présentent chacun un dispositif de commande et de régulation (6), sachant qu'au moins une bobine inductrice (4) est reliée à un dispositif ampèremétrique (5) qui, pour la fourniture continuelle du courant de bobine en tant que grandeur de régulation, est relié à une entrée du dispositif voisin de commande et régulation (6), dispositif qui est configuré pour modifier la fréquence, en tant que grandeur réglable, de la tension de sortie d'au moins un onduleur (1) alimentant la bobine inductrice (4), sachant que les dispositifs de commande et régulation (6) respectivement affectés à une bobine inductrice sont reliés entre eux via un bus de terrain (7) via lequel est spécifié un courant de consigne en tant que grandeur de guidage.

2. Dispositif selon la revendication 1, sachant qu'est disposée une bobine inductrice (4) officiant de bobine maître, qui est reliée avec un dispositif ampèremétrique (5), lequel est relié au bus de terrain (7) pour synchroniser le courant des bobines inductrices (4) restantes afin de fournir continuellement le courant de bobine en tant que grandeur de guidage.

3. Dispositif selon l'une des revendications précédentes, sachant qu'est disposé au moins un redresseur (8) servant à transformer une tension alternative triphasée en tension continue monophasée pour alimenter les onduleurs (1) en tension.

4. Procédé pour l'échauffement uniforme de produits métalliques, comprenant un dispositif selon l'une des revendications 1 à 3, sachant que sur au moins deux bobines inductrices (4) - disposées réciproquement décalées et reliées chacune en parallèle avec un condensateur de compensation (3) - est appliquée une tension alternative via respectivement au moins un onduleur (1), sachant que le courant de chaque bobine inductrice (4) est continuellement mesuré et qu'en fonction d'un courant de consigne spécifié la fréquence des onduleurs (1) est modifiée à l'intérieur d'un circuit régulateur fermé de sorte que le courant mesuré des bobines inductrices (4) s'ajuste sur le courant de consigne pour être régulé.

5. Procédé selon la revendication 4, sachant qu'une bobine inductrice (4) est utilisée comme bobine maître, dont le courant de bobine est saisi continuellement par un dispositif ampèremétrique (5) et spécifié aux circuits de régulation des autres bobines inductrices (4) en tant que grandeur de guidage.
